# EUROPÄISCHE PATENTSCHRIFT

(11) **EP 0 517 081 B1**
(45) Veröffentlichungstag und Bekanntmachung des Hinweises auf die Patenterteilung: **01.02.1995**
(21) Anmeldenummer: 92108894.4
(22) Anmeldetag: 27.05.1992
(51) Int. Cl.: B61D 27/00, B60H 1/00

(54) **Klimakompaktgerät**
Compact air conditioner
Conditionneur compact

(30) Priorität: 05.06.1991 DE 4118745
(43) Veröffentlichungstag der Anmeldung: 09.12.1992
(73) Patentinhaber: HAGENUK FAHRZEUGKLIMA GmbH, D-04435 Schkeuditz (DE)
(72) Erfinder: Gaik, Gerd, W-2301 Kronshagen (DE)
(74) Vertreter: Drömer, Hans-Carsten, Dr.

(56) Entgegenhaltungen:
- EP-A- 0 397 557
- US-A- 4 043 143
- US-A- 4 727 728

## Beschreibung

Die Erfindung betrifft ein Klimakompaktgerät, das insbesondere für Schienenfahrzeuge und vorzugsweise für Reisezugwagen auch in schnellfahrenden Personenzügen geeignet ist.

Aus DE 36 03 608 A1 ist eine Vorrichtung zur Belüftung und Klimatisierung von Schienenfahrzeugen bekannt, bei der ein der Luftbehandlung dienender Teil mit einem Filter, einem Kühlregister und einem Heizregister unterhalb des Fahrgastraumes angeordnet ist, wobei an einer Seite Luft von außen und aus dem Fahrgastraum angesaugt und an der anderen Seite die vermischte und behandelte Luft in den Fahrgastraum abgegeben wird. Bei einer solchen Anordnung werden der Verdichter und der Kondensator sowie weitere Teile des Kältemittelkreislaufs vor oder hinter den Einrichtungen zur Luftbehandlung unter dem Wagen angeordnet und müssen bei der Montage von Fachkräften durch Kältemittelleitungen mit dem im Luftbehandlungsteil befindlichen Verdampfer verbunden werden. Diese Montage ist mit einem hohen Arbeitsaufwand verbunden und ermöglicht eine Funktionsprüfung der Klimaanlage erst, nachdem alle Teile unter dem Wagenboden angebracht sind. Durch andere Geräte, die dort anzuordnen sind, wird der für die Klimaanlage verfügbare Platz unter dem Wagenboden zunehmend knapper. Für Großraumwagen ist es außerdem gewünscht, Luft an beiden Seiten beispielsweise über unterhalb der Fenster verlaufende Kanäle zuzuleiten.

Der Erfindung liegt daher die Aufgabe zugrunde, ein kompaktes, platzsparendes Klimagerät zu schaffen, bei dem alle notwendigen Teile in einer vormontierbaren Einheit vereinigt sind.

Diese Aufgabe ist durch die Merkmale des Anspruchs 1 gelöst.

Der Kältemittelkreislauf des Klimakompaktgerätes besteht in bekannter Weise aus einem Verdichter, einem Kondensator, einem Verdampfer, einem Druckentspannungsventil, einem Behälter für flüssiges Kältemittel sowie geeigneten Steuerungs- und Kontrollmitteln. Der Verdampfer ist als Lamellenwärmetauscher zur Luftkühlung ausgebildet und befindet sich in dem der Luftbehandlung dienenden Teil. Das Luftbehandlungsteil weist darüber hinaus einen Filter und eine Beheizungseinrichtung auf sowie wenigstens einen Ventilator, der die Luftströmung erzeugt.

Die Teile des Kältemittelkreislaufes und die zur Luftbehandlung dienenden Teile sind gemeinsam und in gedrängter Bauweise an einem zur Unterflurmontage geeigneten Rahmen angeordnet. Der Verdichter und der Kondensator mit ihm zugeordneten Axiallüftern befinden sich an einem Ende des Rahmens, also etwa an einer Längsseite des Schienenfahrzeugs. Die der Luftbehandlung dienenden Teile sind in einem Gehäuse am übrigen Teil des Rahmens untergebracht. Die Kältemittelleitungen zwischen Verdichter, Kondensator und Verdampfer sind an dem Rahmen und, soweit erforderlich, im Gehäuse fest verlegt. Die Luftführung in dem Gehäuse ist so ausgebildet, daß Raumluft von einer Seite des Fahrzeugs direkt dem Filter zugeleitet wird. Der zirkulierenden Raumluft wird noch vor dem Filter Außenluft zugemischt.

Aus US 4,043,143 ist ein Klimakompaktgerät, insbesondere für Schienenfahrzeuge bekannt. Dieses besteht aus einen Verdichter, einen Kondensator und einen Verdampfer umfassenden Kältemittelkreislauf, wobei der Verdampfer als Lamellenwärmetauscher zur Luftkühlung ausgebildet ist. Es sind ferner Luftkanäle vorhanden, die mit den zu klimatisierenden Räumen verbindbar sind und an denen sich eine Beheizungseinrichtung sowie ein Ventilator befinden, wobei der Lamellenwärmetauscher sowie die Beheizungseinrichtung versetzt zueinander angeordnet sind. Die Teile des Kältemittelkreislaufes und der Luftbehandlung sind gemeinsam in gedrängter Bauweise an einem geeigneten Rahmen angebracht. Der Verdichter und der Kondensator mit ihm zugeordneten Axiallüfter ist an einem Ende des Rahmens angeordnet und die der Luftbehandlung dienenden Teile wie Verdampfer, Beheizungseinrichtung und Lüfter befinden sich in einem Gehäuse am übrigen Teil des Rahmens, und die Kältemittelleitungen zwischen Verdichter, Kondensator und Verdampfer sind an dem Rahmen fest verlegt.

Um bei Zügen mit hoher und höchster Geschwindigkeit Druckstöße im Fahrgastraum auszuschließen, die beispielsweise auftreten können, wenn sich zwei Züge begegnen oder der Zug in einen Tunnel fährt, werden zweckmäßigerweise vor dem Klimakompaktgerät bekannte Luftzuführungseinrichtungen angeordnet, die Klappen aufweisen, welche sich bei Druckstößen schließen.

Die Eintrittsöffnung für die Außenluft beispielsweise befindet sich an der Seitenwand des Gerätes. Bei nur einseitiger Zuführung von Außenluft wird hier ein Querrohr angeordnet, durch welches die Außenluft der angesaugten Raumluft vor dem Filter im wesentlichen über die gesamte Anströmfläche gleichmäßig zugemischt wird. Hinter dem Filter strömt die Luft durch die beiden Verdampfer und wird danach durch die Heizungseinrichtung (z. B. Heizregister mit elektrischen, hochspannungsfesten Heizstäben) geführt und seitlich durch Radiallüfter abgesaugt und in seitliche Luftführungskanäle geleitet, an deren Enden sie in Kanäle im Fahrgastraum austritt.

Das Gehäuse ist durch eine leicht zu öffnende Wartungsklappe von der Seite her zugänglich. Durch diese kann der Luftfilter-Wechselrahmen leicht ausgetauscht werden. Das gleiche gilt für die beiden in Längsrichtung liegenden Verdampfer und Heizregister. Durch die leicht zu entfernende Wartungsklappe sind darüber hinaus in Räumen beiderseits vom Filter untergebrachte Ventile und Steuerungseinrichtungen ebenfalls leicht zugänglich.

Wenn auch eine Beheizungseinrichtung mit elektrischen Heizstäben bevorzugt ist, so ist jedoch auch eine andere Beheizung, beispielsweise mit Dampf oder warmem Wasser möglich.

Erfindungsgemäß sind an den Austrittsseiten des Verdampfers und des Kondensators wenigstens ein Rohr, vorzugsweise wenigstens eine Rohrreihe, eines Kühlkreislaufes zur Abführung von Verlustwärme einer Energieversorgungseinrichtung des Fahrzeuges angeordnet. Diese Energieversorgung kann beispielsweise eine im Fahrzeug angeordnete elektrische Einrichtung sein, die Frequenz und Spannung des über die Oberleitung des Zuges zugeführten Stromes auf die im Fahrzeug benötigten Werte umwandelt. Eine derartige Einrichtung bedarf der Kühlung. Diese Kühlung kann über einen Kreislauf mit Sole oder mit einem Thermoöl erfolgen. Im Sommerbetrieb wird dieses Kühlmittel in der Rohrschlange am Kondensator, gegebenenfalls mit Hilfe der dort vorhandenen Lüfter, gekühlt. Im Winterbetrieb wird die Verlustwärme aus diesem Kühlkreislauf durch die Rohrschlange am Verdampfer geleitet, und die Verlustwärme dient nun zum Aufheizen der zu behandelnden Luft.

Bei Sommerbetrieb oder warmem Wetter wird die Verlustwärme der Energieversorgungseinrichtung durch die Kühlschlange am Kondensator an die Außenluft abgegeben. Bei kühleren Übergangstemperaturen wird die Verlustwärme durch die Rohrschlange an dem nun nicht mehr in Betrieb befindlichen Verdampfer an die in den Fahrgastraum zurückgeführte Luft abgegeben. Bei kälteren Temperaturen oder im Winterbetrieb werden zusätzlich mehrere oder alle Heizstäbe der Beheizungseinrichtung zum Erwärmen der Luft eingesetzt.

Im Sommerbetrieb kann sich Kondensat am Verdampfer niederschlagen. Der Boden des Gehäuses ist daher zweckmäßigerweise mit einer Kondensatsammelwanne versehen oder als eine solche ausgebildet und weist ein Kondensatablaßventil auf. Auch dieses Ventil ist gegen auftretende Druckstöße in geeigneter Weise gesichert.

Weitere Einzelheiten des Klimakompaktgerätes werden anhand des auf den beigefügten Zeichnungen vereinfacht dargestellten Ausführungsbeispiels beschrieben, die die Zuordnung der einzelnen Aggregate zueinander zeigen, aber als schematische Darstellungen Größenvergleiche untereinander nicht zulassen.

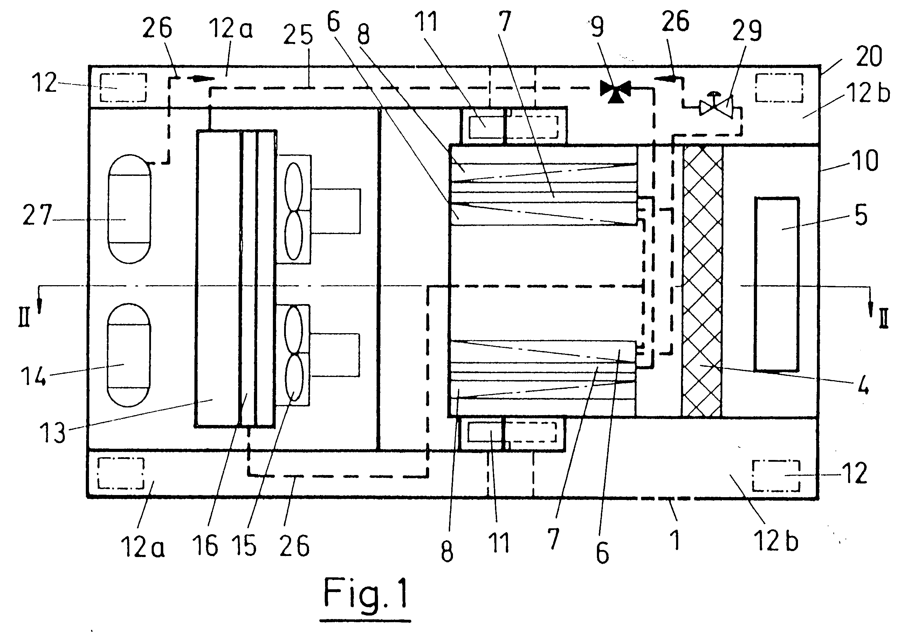

Es zeigen
- Fig. 1: eine Draufsicht auf das Gerät, wobei ein horizontaler Schnitt etwa entsprechend I-I in Fig. 2 dargestellt ist,
- Fig. 2: einen vertikalen Mittellängsschnitt etwa entsprechend II-II in Fig. 1.

Das Klimakompaktgerät umfaßt einen Rahmen 20, der in der schematischen Darstellung nicht im einzelnen gezeigt ist. Mit dem Rahmen 20 wird es unter einem Fahrzeug, das nicht gezeigt ist, befestigt, und unter diesem Rahmen 20 sind die einzelnen Geräte und Luftführungsteile angeordnet.

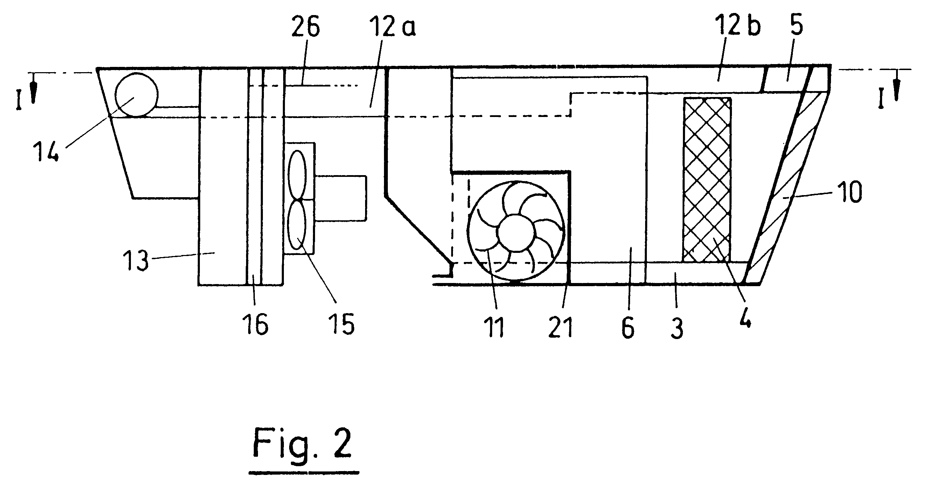

In dem Luftbehandlungsteil wird von nicht dargestellten Zuführungseinrichtungen Außenluft über eine Eintrittsöffnung 1 und ein Querkanal 3 (Fig. 2) zugeführt und über Kanäle der durch eine Öffnung 5 aus dem Fahrzeug angesaugten Raumluft vor einem Filter 4 zugemischt. Von hier strömt die Luft durch die Verdampfer 6, die als Lamellenwärmetauscher ausgebildet sind. Die letzte Rohrreihe des Verdampfers 6 wird als Wärmetauscher 7 für einen Kühlkreislauf benutzt. Hinter dem Verdampfer befindet sich eine Beheizungseinrichtung 8, in der vorzugsweise eine Anzahl elektrischer Heizstäbe angeordnet ist. Nach Durchströmen der Heizungseinrichtung 8 wird die behandelte Luft durch seitlich angeordnete Radiallüfter 11 abgesaugt und in seitliche Luftkanäle 12a und 12b gedrückt, die zu Austrittsöffnungen 12 führen, über die die Luft zu den Verteilungseinrichtungen innerhalb des Fahrzeugraumes gelangt.

Verdampfer 6 mit der Rohrschlange 7 und die vorzugsweise eine Vielzahl von elektrischen Heizstäben enthaltende Beheizungseinrichtung 8 sind in bezug auf ihre Bauhöhe und Unterbringung im Luftführungsteil so ausgebildet und angeordnet, daß nach Entfernen des Filters 4 die gesamte Beheizungseinrichtung 8 und die Verdampfer 6 demontiert und ausgewechselt werden können.

Der Kältemittelkreislauf umfaßt einen Verdichter 14 und einen Kondensator 13, an dem ein Rohr 16 bzw. eine entsprechende Rohrschlange angeordnet ist. Der Kondensator 13 wird mittels Axiallüftern 15 durch Luft gekühlt. Neben dem Verdichter 14 ist ein Sammler 27 für flüssiges Kältemittel angeordnet. Die Kältemittelleitungen 26 sind an dem Rahmen 20 fest verlegt und auf den beigefügten Figuren nur angedeutet.

Die gedrängte Bauweise der für die Luftbehandlung vorgesehenen Teile in dem Gehäuse 21 schafft die Möglichkeit, den Verdichter und den Kondensator neben dem Gehäuse 21 an dem Rahmen 20 anzubringen und dabei eine Baulänge des Klimakompaktgerätes in Richtung der Fahrzeuglängsachse von etwa 2100 mm zu halten bei einer maximalen Breite von 2700 mm. Da die Luftbehandlung etwa in der Mitte des Klimakompaktgerätes bzw. des Fahrzeuges beendet ist, sind die Luftkanäle 12a, 12b zu den Austrittsöffnungen 12 nahe den Seiten des Fahrzeugs vorgesehen. Dabei sind die Kanäle 12a schmal und hoch ausgeführt, damit für Verdichter 14 und Kondensator 13 ausreichender Platz vorhanden ist. Die Kanäle 12b sind dagegen flach, aber breiter, um eine möglichst große Bauhöhe für das Filter 4 sowie den Verdampfer 6 zuzulassen.

Bei dem dargestellten bevorzugten Ausführungsbeispiel mit dem Rohren 7 und 16 (in Luftrichtung) hinter dem Verdampfer 6 und dem Kondensator 13 wird zusätzlich ein Kühlmittel einer Energieversorgungseinrichtung in einer Kühlmittelleitung 25 zirkuliert. Ein Umschaltventil 9 leitet das vorzugsweise flüssige Kühlmittel im Winterbetrieb über das Rohr 7 und im Sommerbetrieb über das Rohr 16. Im Winterbetrieb wird üblicherweise der Kältemittelkreislauf nicht eingeschaltet und im Sommerbetrieb die Beheizungseinrichtung 8 nicht angestellt. Die Verlustwärme der Energieversorgungseinrichtung ist jedoch stets abzuführen. Bei Übergangstemperaturen kann die zu klimatisierende Luft daher ausschließlich über das Rohr 7 erwärmt werden, und erst wenn dies nicht genügt, wird die Beheizungseinrichtung 8 eingeschaltet.

Das Gehäuse 21 ist an einer Seite mit einem leicht demontierbaren Wartungsdeckel 10 versehen. Durch ihn sind von der Seite des Schienenfahrzeugs her der Filter 4 und die Beheizungseinrichtung 8 leicht zugänglich. In Räumen beiderseits neben Filter und Verdampfer sind Ventile 9, 29 und andere Steuer- oder Kontrolleinrichtungen an der Kältemittelleitung 26 und der Kühlmittelleitung 25 angeordnet. Nach Abnahme des Wartungsdeckels 10 sind auch diese Einrichtungen von der Seite des Fahrzeugs her zugänglich und können kontrolliert sowie gegebenenfalls bedient werden.

Das Klimakompaktgerät kann als eine fabrikmäßig hergestellte Einheit auf Funktionsfähigkeit erprobt und mit dem Kältemittel gefüllt zur Montage am Fahrzeug angeliefert werden. Hier sind dann nur noch die Luftanschlüsse sowie elektrische Anschlüsse für Energie und Steuerung vorzunehmen. Ferner ist gegebenenfalls der Kühlmittelkreislauf anzuschließen, was jedoch weniger problematisch ist als bei der Montage an einem Fahrzeug vorzunehmende Verbindungen von Kältemittelleitungen. Neben dem geringen Platzbedarf an der Unterseite des Fahrzeugs ist daher die Verringerung der Montagekosten beachtlich.

## Patentansprüche

1. Klimakompaktgerät, insbesondere für Schienenfahrzeuge, bestehend aus einem einen Verdichter (14), einen Kondensator (13) und einen Verdampfer (6) umfassenden Kältemittelkreislauf, wobei der Verdampfer (6) als Lamellenwärmetauscher zur Luftkühlung ausgebildet ist und aus Luftkanälen, die mit den zu klimatisierenden Räumen verbindbar sind und an denen sich wenigstens ein Filter (4) und eine Beheizungseinrichtung (9) sowie ein Ventilator (11) befinden, wobei Filter (4), Lamellenwärmetauscher (6) sowie Beheizungseinrichtung (8) versetzt zueinander angeordnet sind, die Teile des Kältemittelkreislaufes und die zur Luftbehandlung dienenden Teile gemeinsam und in gedrängter Bauweise an einem zur Unterflurmontage geeigneten Rahmen (20) angebracht sind, der Verdichter (14) und der Kondensator (13) mit ihm zugeordneten Axiallüftern (15) an einem Ende des Rahmens (20) angeordnet sind, die der Luftbehandlung dienenden Teile wie Filter (4), Verdampfer (6), Beheizungseinrichtung (8) und Lüfter (11) sich in einem Gehäuse (21) am übrigen Teil des Rahmens (20) befinden, die Kältemittelleitungen (26) zwischen Verdichter (14), Kondensator (13) und Verdampfer (6) an dem Rahmen (20) fest verlegt sind, die Luftführungseinrichtungen so gestaltet sind, daß Raumluft aus dem Fahrzeug über eine Öffnung (5) direkt und zuzumischende Außenluft durch eine Eintrittsöffnung (1) zum Filter (4) und unter Vermischung mit der Raumluft weiter zum Verdampfer (6) geleitet wird, in die Beheizungseinrichtung (8) eintritt und seitlich mittels Radiallüftern (11) abgesaugt und durch unmittelbar unter dem Rahmen (20) befindliche seitliche Kanäle (12a, 12b) zu Austrittsöffnungen (12) zum Fahrzeuginnenraum gedrückt wird und wobei
sich an den Austrittsseiten des Verdampfers (6) und des Kondensators (13) wenigstens je ein Rohr (7 und 16) eines Kühlkreislaufes (25) zur Abführung der Verlustwärme einer Energieversorgungseinrichtung des Fahrzeugs befinden und in diesem Kühlkreislauf ein Umschaltventil (9), welches sich innerhalb des Gehäuses (21) befindet, angeordnet ist, um im Winterbetrieb über das Rohr (7) die Verlustwärme an die zu behandelnde Luft abzugeben und im Sommerbetrieb die Verlustwärme über das Rohr (16) und die Axiallüfter (15) abzuführen.

2. Klimakompaktgerät nach Anspruch 1, dadurch gekennzeichnet, daß die Beheizungseinrichtung (8) hochspannungsfeste Heizstäbe enthält, die sich parallel zum Verdampfer (6) erstrecken.

3. Klimakompaktgerät nach einem der Ansprüche 1 bis 2, dadurch gekennzeichnet, daß das Gehäuse (21) mit einem seitlichen Wartungsdeckel (10) versehen ist, durch den die in ihm untergebrachten Teile zugänglich und auswechselbar sind.

## Claims

1. Compact air conditioner, more especially for rail vehicles, comprising a refrigeration cycle, which includes a compressor (14), a condenser (13) and an evaporator (6), the evaporator (6) being configured as a finned heat exchanger for cooling air, and comprising air ducts, which are connectable to the areas to be air-conditioned and on which are situated at least one filter (4) and one heating means (8) as well as a fan (11); the filter (4), finned heat exchanger (6) and heating means (8) being disposed in an offset manner relative to one another, the parts of the refrigeration cycle and the parts serving to treat air being mounted jointly and in a compact manner on a frame (20), which is suitable for underfloor assembly, the compressor (14) and the condenser (13), which has axial fans (15) associated therewith, being disposed on one end of the frame (20), the parts serving to treat air, such as filter (4), evaporator (6), heating means (8) and fan (11), being situated in a housing (21) on the remaining portion of the frame (20), the refrigeration lines (26) between compressor (14), condenser (13) and evaporator (6) being securedly installed on the frame (20), the air guiding means being so configured that ambient air from the vehicle is conducted further to the evaporator (6) directly via an aperture (5), and outside air to be admixed is conducted further to the evaporator (6) through an inlet aperture (1) to the filter (4), thereby mixing with the ambient air, such air entering the heating means (8) and being evacuated laterally by means of radial fans (11) and being urged to the interior of the vehicle through lateral ducts (12a, 12b), which are situated immediately beneath the frame (20) and extend to outlet apertures (12), and at least one pipe (7 and 16) of a coolant cycle (25) being situated on the respective outlet sides of the evaporator (6) and of the condenser (13) for discharging the heat loss from an energy supplying means of the vehicle, and a changeover valve (9), which is situated internally of the housing (21), being disposed in this coolant cycle in order to transfer the heat loss to the air to be treated via the pipe (7) during winter operation, and in order to discharge the heat loss via the pipe (16) and the axial fans (15) during summer operation.

2. Compact air conditioner according to claim 1, characterised in that the heating means (8) contains heating rods which are resistant to high potential and extend parallel to the evaporator (6).

3. Compact air conditioner according to one of claims 1 to 2, characterised in that the housing (21) is provided with a lateral maintenance cover (10), through which the parts accommodated in said housing are accessible and interchangeable.

## Revendications

1. Appareil de climatisation sous forme compacte, en particulier pour véhicules ferroviaires, se composant dun circuit à agent de refroidissement qui comporte un compresseur (14), un condenseur (13) et un évaporateur (6), l'évaporateur (6) étant prévu sous la forme d'un échangeur de chaleur à ailettes pour le refroidissement de l'air, et de canaux à air qui peuvent être en liaison avec les espaces à climatiser et ou se trouvent au moins un filtre (4) et un dispositif de chauffage (8), ainsi qu'un ventilateur (11), le filtre (4), l'échangeur de chaleur à ailettes (6), ainsi que le dispositif de chauffage (8) étant disposés avec décalage l'un par rapport à l'autre, les éléments du circuit à agent de refroidissement et les éléments servant au traitement de l'air étant montés en commun et suivant un mode de construction resserré dans un châssis (20) qui se prête au montage sous plancher, le compresseur (14) et le condenseur (13), avec des ventilateurs axiaux (15) y adjoints, étant montés à une extrémité du chassis (20), les éléments servant au traitement de l'air, tel que le filtre (4), l'évaporateur (6), le dispositif de chauffage (8) et le ventilateur (11) se trouvant dans un logement (21), dans une autre partie du chassis (20) les conduits à agent de refroidissement (26), entre le compresseur (14), le condenseur (13) et l'évaporateur (6), étant montés fixes sur le châssis (20), les dispositifs de guidage de l'air étant prévus sous une forme telle que l'air ambiant sortant du véhicule soit conduit directement par une ouverture (5) et que l'air extérieur à mélanger soit conduit par une ouverture d'entrée (1), vers le filtre (4) et, en mélange avec l'air ambiant, soit ensuite conduit vers l' évaporateur (6), pénètre dans le dispositif de chauffage (8), soit aspiré latéralement au moyen des ventilateurs radiaux (11) et soit, par des canaux latéraux (12a, 12b) se trouvant immédiatement en dessous du châssis (20) envoyé sous pression vers des ouvertures de sortie (12) menant à l'espace intérieur du véhicule et aux côtés de sortie de l'évaporateur (6) et du condenseur (13) se trouvant respectivement au moins un conduit (7) et au moins un conduit (16) d'un circuit de refroidissement (25) pour l'évacuation de la chaleur perdue d'un dispositif d'alimentation en énergie du véhicule et dans ce circuit de refroidissement étant montée une valve de commutation (9) qui se trouve à l'intérieur du logement (21) pour céder la chaleur perdue, en période de marche hivernale, par le conduit (7), à l'air à traiter, et pour évacuer la chaleur perdue, en période de marche estivale, par le conduit (16) et par les ventilateurs axiaux (15).

2. Appareil de climatisation sous forme compacte suivant la revendication 1, caractérisé en ce que le dispositif de chauffage (8) comporte des barreaux chauffants pouvant résister à la haute tension, qui s'étendent parallèlement à l'évaporateur (6).

3. Appareil de climatisation sous forme compacte suivant l'une ou l'autre des revendications 1 et 2, caractérisé en ce que le logement (21) est muni d'un couvercle latéral de surveillance et d'entretien (10), grâce auquel les éléments montés dans ce logement sont accessibles et peuvent être remplacés.
